# EUROPEAN PATENT APPLICATION

(11) **EP 1 387 271 A1**
(43) Date of publication of application: **04.02.2004**
(21) Application number: 02016820.9
(22) Date of filing: 29.07.2002
(51) Int. Cl.: G06F 11/34

(54) **Method and apparatus for generating an operational processing load**

(71) Applicant: SUN MICROSYSTEMS, INC., Palo Alto, California 94303 (US)
(72) Inventor: Oppermann, Lars, 22335 Hamburg (DE)
(74) Representative: HOFFMANN - EITLE

(57) **Abstract**

Method and apparatus for generating an operational load condition at a server (110). A plurality of communication sessions (120,...,122) is established on a client (100) and test input operations are accessed and produced in each of the communication sessions, in order to generate a realistic operational load condition. The communication sessions and/or the playback operations may be started with appropriate time delays. The test input may be constituted by recorded user input operations in a graphical user interface at the client.

## Description

### FIELD OF THE INVENTION

The present invention relates to a method and apparatus for generating an operational processing load, e.g. in a client server system.

### BACKGROUND OF THE INVENTION

Computing devices are increasingly used in an steadily growing number of fields. For example, computing devices are generally applied to provided services in office environments, for example to provide for text processing applications, spreadsheet applications, communication applications, accounting applications, scientific applications and similar. Moreover, computing devices are increasingly employed for services in private environments, for example text processing applications, organizers, for purchasing transactions, banking transactions, communication applications, entertainment applications and similar.

Further, with the continuously increasing processing capabilities of computing devices and the increased proliferation of computers in offices and homes, computer applications are becoming increasingly versatile and complex.

Moreover, conventionally application programs e.g. for one of the above outlined services, were installed on a stand-alone computing device such as a desktop computer, and received an input from local input devices such as a keyboard and mouse, floppy disk, CD ROM, etc. and provided a local output, e.g. to a screen, or were used to store generated or modified data files. As opposed thereto, computing devices are now increasingly interconnected via computer networks, allowing an exchange of data between different computing devices. For example, a service application may not only reside on a single data processing device, but may be distributed over a plurality of data processing devices, the execution of the application being controlled via the computer network. Further, different applications, e.g. for providing one of the above outlined services, may exchange information regarding the provided service or user.

For example, one of the above outlined services could be provided in a client and server environment, where a service application resides on a server unit, the service application being controlled by a user operating a client unit. The user would then transmit commands for controlling the application via a computer network to the server unit. In this case the main portion of the service application could be located at the server unit, e.g. a part of the service application requiring large resources, while only little more than an access and control portion of the service application could be provided at the client unit.

Accordingly, resources at the client unit can be saved, which is particularly important in case small client devices are used, such as palmtop computers, personal digital assistants, mobile phones, etc.

Further, installing the main portion of the service application at the server unit enables a central maintenance of the service application and enables use of the service application by a plurality of users, e.g. concurrently accessing the server unit from a plurality of client units.

The above technique can for example be applied in office environments or private use environments to remotely provide any kind of service, such as text processing services, spreadsheet services, communication services, computer games or similar.

In order to gain access to the service application, i.e. to obtain a desired service, a user may establish a communication session between a client unit and a server unit, the communication session being an active connection between the client unit and the server unit. The communication session may be established over any kind of communication link, e.g. network connecting the client unit and the server unit or any kind of dedicated communication line, etc.

As the server enables access to services for a plurality of users, the server may be required to handle a plurality of communication sessions with a plurality of client units at the same time. Thus, there may occur a problem in that a plurality of users is concurrently accessing a server unit or a plurality of server units, the requested computing resources exceeding the resources available at the server unit or plurality of server units. Accordingly, the service provided to the individual user may degrade or, in the worst case, the server unit may deny any further service due to an overload situation.

Accordingly, it is important to obtain information on a behaviour of the server unit or plurality of server units under an operational load condition, to be able to appropriately dimension or configure a server etc.. Preferably, a stress testing of a server under an operational load condition will be performed during a test phase of an existing or new service application or applications, prior to releasing the service application or applications for use by subscribers.

As a straight forward approach for stress testing a server unit or units, a plurality of client units could be provided in the test phase, and each client unit could be used to establish a communication session with the server unit or units, and simulation software for simulating user behaviour could be executed on each single client unit.

While this approach may be-feasible for a small number of client units, i.e., a small number of client communication sessions, simulating a large number of client units, e.g. in the range of one hundred or several hundreds of client units, may require excessive time and resources.

### SUMMARY OF THE INVENTION

It is therefore desirable to provide for generating an operational processing load requiring decreased implementation efforts and costs.

According to an embodiment a method for generating an operational processing load includes accessing, at a client unit, test input for controlling at least one application; establishing a plurality of communication sessions involving the at least one application; and producing the test input in association with each of the plurality of communication sessions. Accordingly, a client unit may be used to establish and conduct a plurality of communication sessions, e.g. between the client unit and the server unit.

In a further embodiment user input operations in a graphical user interface at the client unit are recorded, and the user input operations, constituting test input, are used for controlling the at least one application at a server unit. Accordingly, user input operations during e.g. a communication session, entered for controlling the application may be recorded for later replay.

In a further embodiment the recording includes recording time intervals between the individual user operations. Thus, information on a time sequence of user input operations can be obtained, in order to improve control of the replay operation.

In a further embodiment the test input is stored as test input data at the client unit and the test input data may be accessed within each of the plurality of communication sessions for replaying the test input data in each of the communication sessions to simulate user input. Accordingly, each communication session can individually retrieve and replay the test input data, e.g., as if the communication sessions were established involving a plurality of client units.

In a further embodiment each of the plurality of communication sessions involves an instance of the graphical user interface at the client unit. Accordingly, each communication session may individually launch a graphical user interface, in order to more realistically simulate a plurality of communication sessions.

In a further embodiment each of the plurality of communication sessions includes a thread in a process involving the at least one application at the server unit. Further, each of the plurality of communication sessions may involve an instance of the at least one application at the server unit. This allows to more realistically simulate computational load generated within each communication session, if a communication session involves an instance of the application or a thread in a process.

In a further embodiment the test input is transmitted in each communication session to the at least one server unit, thus allowing each communication session to individually control the application.

In a further embodiment the production of the test input is started in at least two communication sessions with a time offset. Further, each of the plurality of communication sessions may be established based on statistical user behaviour data. Moreover; the production of the test input in each communication session may be started based on statistical user behaviour. Still further, the reproduction of the test input may involve modifying time intervals between the individual operations of the test input, and this may involve compressing or expanding the time intervals between the individual operations of the test input. Accordingly, a realistic user behaviour may be simulated.

In a further embodiment a program is provided having instructions adapted to cause data processing means to carry out at least one of the above operations. Further, a computer readable medium may be provided, in which a program is embodied, where the program is to make a computer execute at least one of the above operations. In a further embodiment a computer program product comprises the computer readable medium.

According to another embodiment a client for generating an operational processing load at a server includes test input means for accessing test input for controlling at least one application; and processing means adapted to establish a plurality of communication sessions involving the at least one application and to produce the test input in association with each of the plurality of communication sessions.

Further advantageous embodiments are disclosed in further claims.

### BRIEF DESCRIPTION OF THE DRAWINGS

- Fig. 1: illustrates an embodiment of a system for generating an operational processing load according to an embodiment of the invention;
- Fig. 2: shows operations of a method for generating an operational processing load according to an embodiment of the invention;
- Fig. 3: shows a system for generating an operational processing load according to an embodiment of the invention;
- Fig. 4: shows operations of a method for generating an operational processing load according to an embodiment of the invention, particularly outlining operations for recording user input;
- Fig. 5: illustrates operations of a method for generating an operational processing load according to an embodiment of the invention, particularly outlining a replay of test input within a plurality of communication sessions;
- Fig. 6: shows operations of a method for generating an operational processing load according to an embodiment of the invention, particularly outlining operations for replaying test input in a plurality of communication sessions;
- Fig. 7: shows operations of a method for generating an operational processing load according to an embodiment of the invention, particularly outlining operations in connections with simulating user behaviour; and
- Fig. 8: shows elements of a system for generating an operational processing load according to an embodiment of the invention.

### DETAILED DESCRIPTION OF THE-PREFERRED EMBODIMENTS

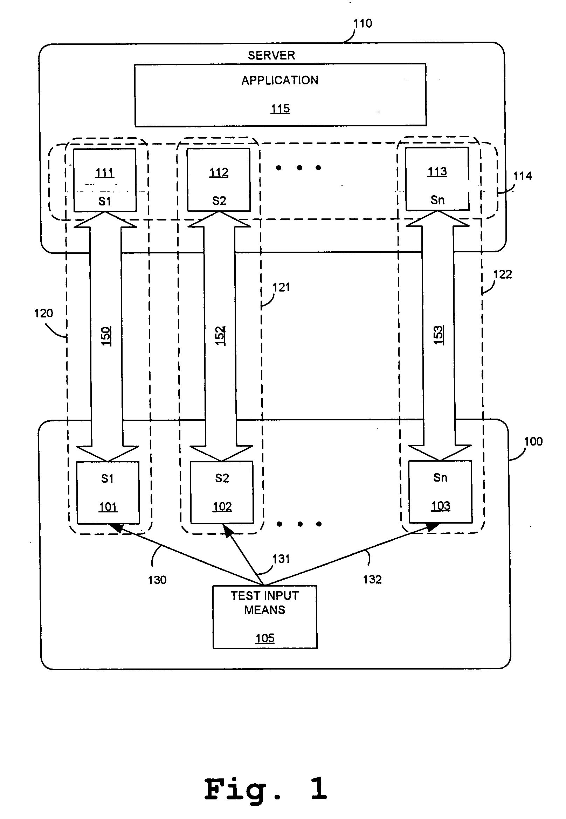

In the following a first -embodiment of the invention will be outlined with respect to Fig. 1.

Fig. 1 illustrates elements of a system for generating an operational processing load according to an embodiment of the invention.

Fig. 1 shows a client 100 and server 110 and a plurality of communication sessions 120, 121 and 122 established between the client 100 and the server 110. While Fig. 1 shows three communication sessions, it is understood that this is an example only and that an arbitrary number of communication sessions may be established.

Further, the server includes an application 115, which may any kind of application to remotely provide a service for a user operating a client unit. In an example the application is controlled through commands transmitted from the client 100 to the server 110 in association with each of the communication sessions 120, 121 and 122. The service application 115 may e.g. be any kind of service application for providing services to a plurality of users, e.g. a text processing application, a spreadsheet application, a banking application, a communication application, an entertainment application or similar.

Moreover, Fig. 1 shows test input means 105 for accessing test input for controlling the application 115, and for producing the test input in association with each of the plurality of communication sessions 120, 121 and 122. Producing the test input can include playing or replaying the test input. In further examples the test input may be constituted by pre-recorded user input operations or by simulated user input operations.

The communication sessions can be established over any kind of communication link or links including, e.g., a local area or wide area computer network, dedicated communication lines or similar, connecting the client 100 and the server 110. In the present case the communication sessions 12-0, 121 and 122 are established through communication links 150, 151 and 152, respectively.

By establishing a plurality of communication sessions for controlling the application and by producing the test input in association with each of the plurality of communication sessions, it is conveniently possible to generate an operational load for the server, e.g. in order to carry out a stress test of the server. For example, performance, stability of the application or other programs, latency between input of commands and service could be monitored. Based on the results of the monitoring, the server or application could appropriately be modified to improve the provided service.

According to an example, each of the communication sessions includes a communication session server portion at the server 110 and a communication session client portion at the client 100. More precisely, The communication session 120 involves a client portion 101 and a server portion 111, the communication session 121 involves a client portion 102 and a server portion 112 and the communication session 122 involves a client portion 103 and a server portion 113.

The client portions of the communication sessions, i.e. the client portions 101, 102 and 103, may be constituted by programs or program modules to establish and maintain the respective communication session, e.g. to transmit commands from the client 100 to the server 110 for controlling the application 115 and to receive and e.g. display processing results from the server. More precisely, the client portions of the communication sessions may be constituted by coded instructions executed on central processing means at the client, to establish the plurality of communication sessions involving the application 115 at the server 110. Alternatively or in addition thereto, in further example the client portions also include hardware components.

Similarly, in an example the communication sessions 120, 121 and 122 include a communication session server portion 111, 112 and 113, respectively. The server portion 111, 112 and 113, similar to the client portions 101, 102 and 103, may be constituted by programs or program modules to establish and maintain the respective communication session, e.g. to receive commands from the client 100 to the server 110 for controlling the application 115 and to return processing results to the client.

The system illustrated in Fig. 1 allows to establish a plurality of communication sessions involving the at least one application at the server, and to effect a replay of the test input in association with each of the plurality of communication sessions. In operation, the test input from the test input means 105 may be provided to each of the communication sessions 120, 121 and 122. In an example the user input operations from the test input means 105 are provided to each of the client portions 101, 102 and 103 of the communication sessions, as illustrated by arrows 130, 131 and 132. The received user input can then be transmitted to the server portions 111, 112 and 113 of the communication sessions 120, 121 and 122, to control the at least one application at the server 110. The user input may originate from a single user or a plurality of users.

The system outlined with regard to Fig. 1 thus allows to simulate a plurality of realistic communication sessions between a client and a unit. This eliminates the need to install and operate a plurality of client units, one for each communication session. Further, the embodiment of Fig. 1 allows to reproduce test input operations within each of the communication sessions, thus realistically simulating a plurality of users controlling the application at the server 110. As the test input is reproduced in each of the plurality of independent communication sessions, a plurality of users and thus a realistic operational load conditions can be simulated. The operat-ional behaviour of the server may then be monitored and appropriately adapted, before the application or applications are released for subscriber use.

In the following, examples of the elements shown in Fig. 1 will be outlined in further detail. It is noted that the following examples show optional or alternative features of the invention and should not be construed as limiting the invention.

First, an example of the client 100 will be outlined in further detail.

The client 100 may generally be constituted by any computing device such as a general purpose computer. Alternatively, in order to be able to simulate a larger number of users, i.e., to establish a larger number of communication sessions with the server 110, a data processing device having increased capacity, e.g. regarding data storage and processing capabilities, may be used. Also a plurality of data processing devices may be combined to form the client 100, in order to still further increase the number of communication sessions which can be established with the server 110.

The client 100 preferably comprises a central processing unit and a memory for storing data and program instructions to realise the functionality of the invention. For example, the central processing-unit may realise functions to establish a plurality of communication sessions involving the at least one application at the server 110, and may realise functions to replay the test input in association with each one of the plurality of communication sessions. Coded instructions and programs to realise this functionality may be stored in a memory and may be retrieved by the central processing unit as required, as known in the art. Alternatively or in addition thereto, at least some of the functionality of the client may be realized by hardware components.

The central processing unit may be adapted to receive, from the test input means 105, the test input operations and to replay these test input operations in association with each of the communication sessions. For example, the test input could be intermediately stored in a memory of the client 100, and be accessed by the central processing unit 104 in connection with each of the communication sessions.

Each of the client portions of the communication sessions may be constituted by a process or a plurality of processes running on the central processing unit. Alternatively, each of the communication sessions could involve a thread in a process at the central processing unit, the process serving all communication sessions.

The communication links 150, 151 and 152 established in connection with each of the communication sessions 120, 121 and 122 may be established via a communication network or at least one dedicated communication link. For transmitting information relevant to the communication sessions between the server and the client any transmission scheme or protocol can be used. The communication sessions 120, 121 and 122, established between the client 100 and the server 110, each constitute an active connection between the client and server, established based on an instruction for a communication session received or generated at the client 100. Each of the client portions 101, 102 and 103 of the communication sessions and each of the server portions 111, 112 and 113 of the communication sessions may be constituted by processes 'or threads executed at the client 100 and the server 110, respectively. A communication between the client portions and server portions of the communication sessions, as indicated by arrows 150, 151 and 152, may be established by any suitable means, for example through the exchange of communication data packets over a packet switched network, such as the internet, a local area network or similar. Alternatively or further thereto, communications between the client portion and the server portions within the communication sessions may be established through at least one dedicated communication link, such as a telephone connection including a wireless connection. Preferably, the communication links 150, 151 and 152 are independent from one another, in order to more realistically simulate individual users, e.g., a session ID and communication bandwidth is allocated individually for each of the communication sessions. Nevertheless, the communication sessions may employ the same communication medium and may even employ one and the same carrier or channel.

In the following, examples of the test input means 105 will be outlined in further detail.

The test input means 105 may form part of the client 100, as shown in the embodiment of Fig. 1. The test input means is arranged for accessing test input and for producing the test input in each of the plurality of communication sessions. Producing the test input can include playing or replaying the test input.

In another example, the test input means is also provided for recording user input operations for controlling the at least one application at the server 110.

The functionality of the test input means may be realized by a central processing unit of the client 100 or by a further processing unit, including further dedicated hardware components.

The test input can be accessed and retrieved from any source such as a memory storing pre-recorded user input operations or a test input source supplying simulated test input. In an example, during operation, the test input means 105 accesses test input operations, e.g. as stored in a memory of the client 100 or at an external location, to provide the test input to each of the communication sessions.

In another example the test input means is arranged to record user input operations as they occur during an exemplary communication session conducted between the client 100 and the server 110, for controlling the at least one application 115. For example, the test input means 105 may be arranged to record user input operations in a graphical user interface (GUI) at the client 100, as input by a real user or by a testing operator for controlling the at least application 115 at the server 110. A graphical user interface (GUI) may constitute a graphics-based user interface that incorporates icons, pull-down menus and a mouse for entering commands, receiving processing results, display information etc. The GUI has become the standard way users interact with a computer or program implemented thereon.

The recorded input data preferably constitute test input operations for controlling one application at the server 110. Alternatively, user input operations for controlling a plurality of applications at the server 110 may be recorded. Moreover, in another example, user input operations from a plurality of users are recorded.

The test input means 105 may be realized as an integral part of the client 100 or may be realized at an external location. If the test input means is arranged at an external location, it may transmit the recorded user operations to the client 100 via a communication network, a dedicated communication link or similar.

Further, a recording portion of the test input means 105 may be provided at an arbitrary location to perform an offline recording of user input operations in a communication session for controlling the at least one application 115. For example, the user input operations could be recorded at a remote location, and information regarding the test input operations could be transferred to the test input means 105 for the playback operation of the test input operations in the communication sessions. A transfer of the information regarding the test input operations could be accomplished through transfer of data over a communication network, could involve a floppy disc, a CD-ROM and similar.

Still further, as an alternative to recording user input operations, the test input means 105 could be arranged to generate a sequence of user input operations, e.g. by random selection from a list of possible user input operations. Thus, the test input means 105 could also be arranged to generate simulated sequences of user input operations for each of the communication sessions.

In the following, examples of the elements of the server 110 will be outlined in further detail.

The server 110 may generally be constituted by any kind of computing device such. However, the server may preferably be constituted by a computing device having large capacity in order to be able to accommodate accesses from a plurality of users involved in a plurality of communication sessions.

Even though in Fig. 1 a single server unit is shown, in an alternate example the server 110 is constituted by a plurality of interconnected server units. For example the server may be constituted by a cluster of servers at one location or distributed and connected over a communication link.

The server 110 preferably includes at least one central processing unit for establishing the plurality of communication sessions. Each of the server portions of the communication sessions, i.e. the server portions 110, 112 and 113, may be constituted by individual communication-session processes, or may be constituted by threads of a single process for all communication sessions. The characteristics of the communication sessions at the server may depend on a specific implementation chosen.

The server 110 includes an application 115 for providing any kind of service, such as outlined above. Preferably, the application 115 provides a service to a plurality of users. The application at the server 110 may be any kind of service application for providing services to a plurality of users, e.g. a text processing application, a spreadsheet application, a banking application, a communication application, an entertainment application or similar. The application 115 is controlled through each one of the communication sessions 120, 121 and 122. For example, in the case of a text processing application, each user may control a private set of text documents, e.g. physically stored at the server, or stored at the respective client. E.g. text documents could be generated, manipulated or retrieved in association with each particular (simulated) user. During operation, user input operations constituting test input for controlling the text processing application could be reproduced in each of the communication sessions, i.e., commands could be transmitted from the client 100 to the server 110 within each of the communication sessions, instructing retrieval, modification or generation of text files.

Alternatively, in another example, instead of a single application, a plurality of applications is provided, the plurality of applications, e.g. of an office productivity suite, being controlled through each of the communication sessions 120, 121 and 122. The application 115 can also be constituted by a single application program having a plurality of modules, e.g. located on different server units and cooperating to provide a particular user service.

Further, in another example, server 110 includes a monitoring unit for monitoring the operational load behaviour generated by the plurality of communication sessions. The monitoring unit may be used to monitor a performance of the server in the presence of a plurality of user access operations occurring in connection with the plurality of sessions, may monitor the stability of the execution of the application program, could be used to monitor a latency of responses to user commands, e.g. to assess a performance of the application as perceived by a user. The monitoring unit may also be arranged at a location external to the server.

It is noted that a program or programs may be provided having instructions adapted to cause a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical-or other tangible medium on which a program is recorded, but can also be a signal, e.g. analog or digital, electronic, magnetic or optical, in which the program is embodied for transmission. The computer readable medium may constitute a data stream embodying the program. Further, the computer-readable medium may constitute a data structure embodying the program. Still further, a computer program product may be provided comprising the computer readable medium.

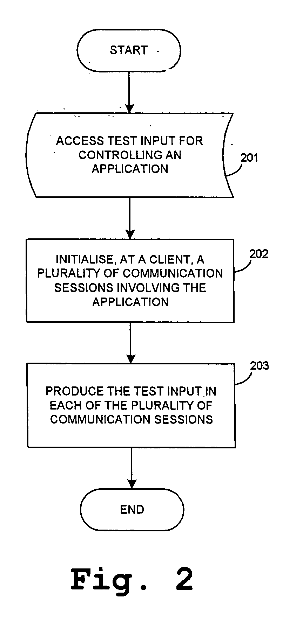

In the following, a further embodiment of the invention will be described with regard to Fig. 2.

Fig. 2 shows operations of a method for generating an operational processing load at a server according to an embodiment of the invention.

The operations of Fig. 2 may be executed using the system shown in Fig. 1, however, Fig. 2 is not limited thereto.

The embodiment of Fig. 2 includes providing a plurality of communication sessions between a client and a server in order to concurrently simulate a plurality of communication sessions involving users controlling an application at the server. A single client unit or a plurality of client units may be provided for establishing the plurality of communication sessions with one server unit or a plurality of server units.

During operation, in a first operation 201 test input for controlling an application is accessed. As outlined before, the user input may be pre-recorded during an actual user communication session involving the application, or, the test input could be constituted by a sequence of, for example, randomly, or according to a certain rule, selected user input commands from a list of possible user input commands. The test input may be avail-able locally at a client, such as the client 100-of Fig. 1, or may be retrieved from an external location; e.g. via a communication link, from a floppy disc, or CD ROM and similar. In an example the test input is constituted by a plurality of user commands, e.g. as input in a graphical user interface when controlling an application at a server, such as a text processing application or similar. Further, in another example, the test input constitutes a time sequence of events generated based upon user input commands, as received through a graphical user interface.

In an operation 202 a plurality of communication sessions is initialised, each of the plurality of communication sessions involving the execution of the application at the server, such as the application 115 and the server 110. In an example the communication sessions are established by means for repeatedly executing a program for initialising a communication session and for assigning, at the client, a client communication session ID to each initialised communication session. The client communication session IDs facilitate to distinguish between the individual communication sessions, e.g. by the test input means when replaying the recorded input operations within each communication session. Parallel thereto the server may allocate a server communication session ID to each communication session. The server communication session ID and the client communication session ID of a communication session need not coincide.

While operation 202 in the present embodiment is performed after operation 201, in an alternative embodiment, operation 202 may be performed before operation 201.

Then, in an operation 203 the test input is produced, i.e. played, replayed or supplied, in each of the plurality of communication sessions, e.g. by the test input means 105 of Fig. 1. Replaying the test input may involve providing, e.g. from test input means to client-portions of the communication sessions, a sequence of events or instructions for transmission to the server to control the application at the server.

In an example replaying the test input in each individual of the communicatron sessions is started at varying points in time and can further be varied based on statistical user data, in order to more realistically simulate user operations.

In the present embodiments it is not any longer necessary to set up a plurality of client units including the required simulation programs, each one for simulating a user accessing the application at the server.

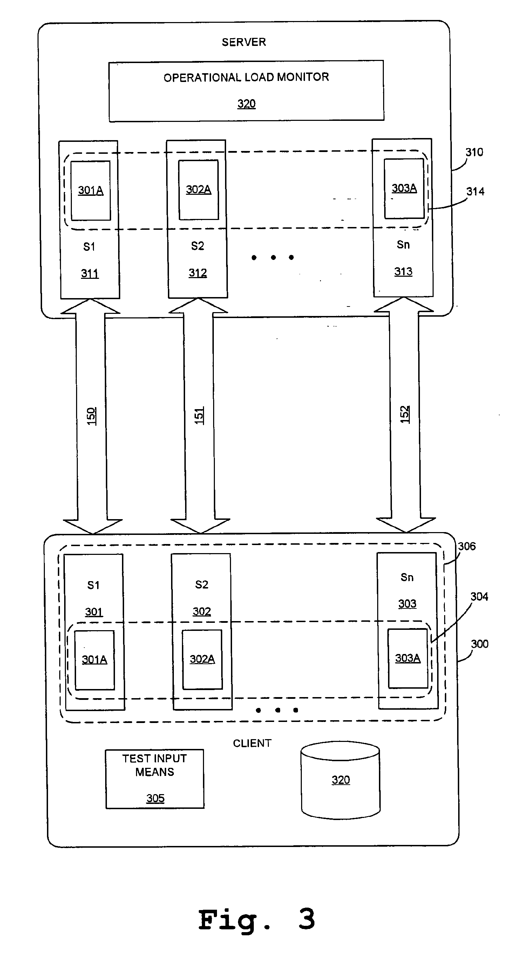

In the following a further embodiment of the invention will be described with respect to Fig. 3.

Fig. 3 shows elements of a system for generating an operational processing load according to another embodiment of the invention.

In Fig. 3, elements similar or identical to the elements of Fig. 1 are denoted by the same reference numerals.

Fig. 3 shows a client 300, with similar configuration as the client 100 shown with regard to Fig. 1. Fig. 3 further shows a server 310, with similar configuration as the server 110 of in Fig. 1. A plurality of communication sessions is established between the client and the server, including client portions 301, 302, and 303 at the client 300 and server portions 311, 312 and 313 of the communication sessions at the server 310 with similar configuration as the respective client and server portions shown in Fig. 1. The communication sessions use communication links 150, 151 and 152 and may be established and maintained as it was described with regard to Fig. 1.

Further, the client includes test input means 305, realized or forming part of the client 300, and includes a memory 320 for storing test input operations, program code and similar.

Still further, the client 300 includes a plurality of user. interfaces 301A, 302A and 303A, each one in association with one of the communication sessions between the client and the server. The user interfaces 301A, 302A and 303A are arranged to receive user input operations from the test input means 305, in order to simulate user behaviour occurring in association with the communication session. For example, the user interfaces 301A, 302A and 303A may be constituted by modified graphical user interfaces, suited to be operated by a user and/or the test input means 305, in order to control the execution of an application at the server 310.

In another example the user interfaces 301A, 302A and 303A are realized by individual processes executed by a central processing unit 306 of the client unit 300, each process associated with an individual one of the communication sessions. Alternatively, in another example, the user interfaces 301, 302 and 303 are constituted by threads of a process for executing code instructions associated with a modified graphical user interface, each of the threads being associated with one of the plurality of communication sessions.

Similar to the embodiment outlined with regard to Fig. 1, the test input means 305 may be adapted to replay test input operations in association with each of the plurality of communication sessions. In this connection, the test input means may retrieve and supply a sequence of user input operations constituting test input or a sequence of events based thereon to each of the user interfaces 301A, 302A and 303A, instructing the user interfaces to transmit the user input operations or associated commands or instructions to the server 310.

In an example the test input means 305 is adapted to record user input operations of a "real" communication session involving a user controlling the at least one application at the server. In order to be able more accurately replay the test input operations, the test input means 305 may be adapted to record time intervals between the individual user input operations. Thus, the actual user behaviour including time spans between individual user input operations may be simulated.

For example, if the application program is constituted by a text processing application, the user input operations may relate to instructions for retrieving, editing or generating text documents, including displaying portions of the text document at the client unit, scrolling through documents, saving operations, data transfer operations and similar. Then, during the playback operation of the test input operations within each of the communication sessions, the exact time sequence and time interval between the user input operations may be reproduced, in order to more accurately simulate the user behaviour.

Still further, the test input means 305 may be adapted to store the test input as test input data and to access the test input data in association with each of the plurality of communication sessions for replaying the test input data in each of the communication sessions for simulating the user input. Thus, the user input operations, i.e. the test input may be reproduced individually and independently within each of the communication sessions, in order to more accurately simulate the behaviour of individual users.

The functionality of the test input means may be realized by a central processing unit of the client or by another internal or external device.

In a further example the test input means or alternatively the central processing unit of the client 300 is adapted to start the reproduction of the test input-in at least two of the communication sessions with a time offset. Accordingly, more natural user behaviour can be simulated, as also in a real world scenario users will establish and conduct a communication session at different points in time. Time shifting of the reproduction of the test input avoids the unrealistic-occurrence of one and the same user input operation of the test input at the same time within each communication session.

Alternatively or further thereto, the test input means 305 and/or a central processing unit of the client 300 may be adapted to establish each of the plurality of communication sessions based on statistical user behaviour data. Thus, a processing load in connection with establishing a communication session between a client computer and the server is distributed as in a practical environment.

For example, the test input means may be adapted to monitor the behaviour of a plurality of real users including time stamps of initialisation of communication sessions and control operations for individual users. Accordingly, communication sessions may be simulated as in a real world scenario, and the reproduction of the test input operations may also be executed as in a real world environment. Thus, the reproduction of the test input operations in each of the communication sessions may be started based on statistical user behaviour data.

Further, in another example, instead of user input operations recorded in association with a single communication session involving a single user, user input operations occurring in connection with a plurality of communication sessions involving a plurality of users are individually recorded and used for the operational load generation.

Still further, the test input means 305 or the central processing unit of the client 300 may be adapted to replay the test input with modified time intervals between the individual user input operations, e.g., modified by compressing or expanding the time intervals between the individual user input operations. Accordingly, time aspects of user behaviour may be considered, e.g. users generating a "slow" sequence of input commands versus users generating a "fast" sequence of user input operations.

The embodiment of Fig. 3 further illustrates an application 314 at the server 310, controlled in association with each of the communication sessions. The application 314 may be constituted by a single application, such as a text processing application, or may be constituted by a plurality of applications, such as a group of applications of an office productivity suite or similar.

Further, in another example, an instance of the application 314 is launched in association with each one of the communication sessions, shown as instances of the application 311A, 312A and 313A. An instance of the application could be a process started at the server for executing the program 314. Thus, an instance may be a single copy of a running program, i.e. the application, and multiple instances of the application mean that the application has been loaded into memory several times.

Alternatively, threads of a process associated with the application program may be maintained in association with each one of the communication sessions. The decision whether to use a process or a thread in a process association with the application may depend on a selected installation of the application.

Still further, the server 310 includes an- operational load monitor 320 for monitoring the operational load behaviour of the server in the presence of the priority of communication sessions and multiple reproduction of the recorded or generated user input operations. The monitoring operations may involve at least one of monitoring a processing load at the server 310 and monitoring a stability of the execution of the application or programs associated with establishing and maintaining the individual communication session at the server, and similar.

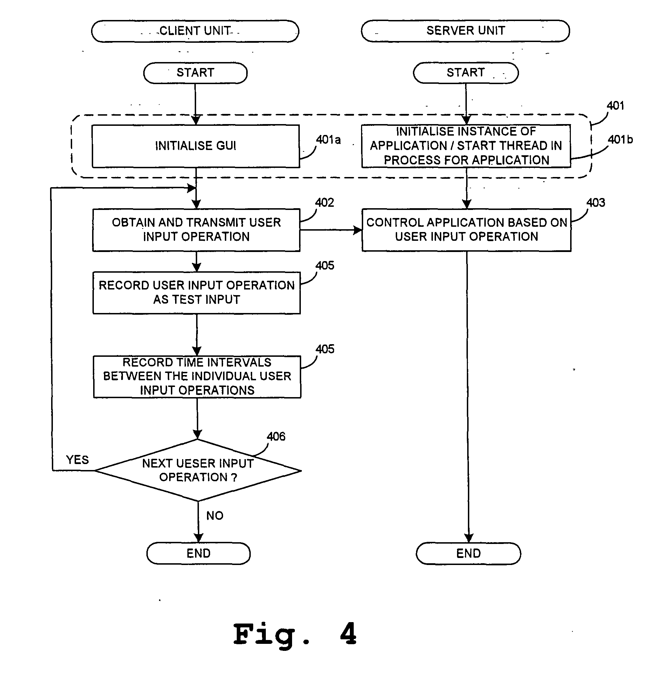

In the following a further embodiment of the invention will be described with respect to Fig. 4.

Fig. 4 shows operations of a method for generating an operation of processing a load according to another embodiment of the invention. The operations of Fig. 4 may be executed by the system of Fig. 1 or Fig. 3, however, Fig. 4 is not limited thereto.

Fig. 4 particularly outlines operations to obtain a set of user input operations for later replay in each of a plurality of communication sessions.

In a first operation 401 a communication session between the client, e.g. client 100 of Fig. 1 or client 300 of Fig. 3 and the server, e.g. server 110 of Fig. 1 or server 310 of Fig. 3, is established. Preferably the communication session will have a unique communication session ID, allowing the server and the client to identify any commands, events etc., occurring in association with the communication session. Operation 401 includes a client initialisation operation 401a at the client, e.g. including the initialisation of a graphical user interface at the client in association with the current communication session.

In another example the graphical user interface involves a graphical user interface program for presenting a graphical display on a display means associated with the client, in order to enable a user to input commands for controlling the progress of the communication session between the client and the server.

Further, in an operation 401b, at the server, the server part of the communication session between the client and the server is initialised, i.e., the server is prepared to receive instructions from the user through the client. Further, at least one service application program will be started at the server, e.g. a text processing program, or programs of an office productivity suite, e.g. including communication programs, spread sheet programs etc. At least one application may be started based on at least one user command, e.g. generated based upon a selection or input of a corresponding command through the graphical user interface at the client.

In another example, starting the at least one application at the server involves initialising an instance for each of the at least one application at the server, i.e., to start a process for each one of the at least application program executing the at least one application. The application program may be stored in a memory associated with the server and may be loaded, e.g., into a random access memory of the server for execution.

In an alternative example an application program is started by allocating a thread in a process executing the application program to the communication session, i.e., to a particular user. In this case a single process may be present for executing the application program at the server, including threads, each threads allocated to a particular user.

In an operation 402 a user input operation is obtained and transmitted to the server. The user input operation may be input using the graphical user interface, and may involve any command for controlling the communication session the at least one application at the server. E.g., if the application at the server-involves a text processing application, the user input operation could involve a command regarding retrieval, modification and similar of a text document, could involve a command related to scaling through a document, saving a document, transferring a document and similar.

In an operation 403 the at least one application at the server is controlled based on the user input operation. In correspondence to the user input command, this could e.g. include retrieving a document and transferring data related to the documents to the client for local display at the client, etc.

In an operation 404 the user input operation of operation 402 is recorded, e.g. using the test input means 105 or 305. Recording the user input operation may include detecting e.g. a command as input in the graphical user interface and storing an identification of the user input command, or could involve detecting and storing events generated at the client based on the user command. The user input operation may be recorded as test input data, e.g. in a file stored at the client.

In an operation 405 time intervals between the individual user input operations are recorded, in order to obtain knowledge about the exact time sequence of operations executed for controlling the communication session. Recording the time intervals may involve recording time intervals of a sequence of events generated at the client in association with user input command for controlling the communication and/or the at least-one application at the server. Further thereto, also a time stamp of initialisation of the communication session between the client and the server may be recorded.

In a operation 406 it is determined whether a next user input operation is present, and, if the decision is YES, the flow of operations returns to operation 402 for a subsequent recording cycle. If the decision in operation 406 is NO, i.e., if a next user input operation is not input, the operations end.

The above embodiment describes an example of recording a communication session as conducted by a user in order to allow a later reproduction of the exact same communication session for testing purposes. The above communication session may be an exemplary communication session, conducted by a testing operator. However, the communication session may also be recorded in a real environment, e.g., a user behaviour of a subscriber of services could be monitored.

Further, in order to obtain further knowledge about user behaviour, a plurality of users may be monitored as outlined above, in order to record a plurality of different communication sessions for later reproduction in an operational load stress testing step.

Further to the above information about the user communication session, information about a time of day of commencing the communication session, and further statistical user behaviour may be recorded. For example, access frequencies of users could be recorded, type and number of applications started could be recorded, resources used and similar.

Alternatively, a possible sequence of user input operations for a later reproduction in an operational load testing step could be generated by selecting user input operations from a list of possible user input operations according to a particular rule.

The above described embodiment allows to obtain at least one exemplary communication session between the client and the server for use in a later stress testing operation.

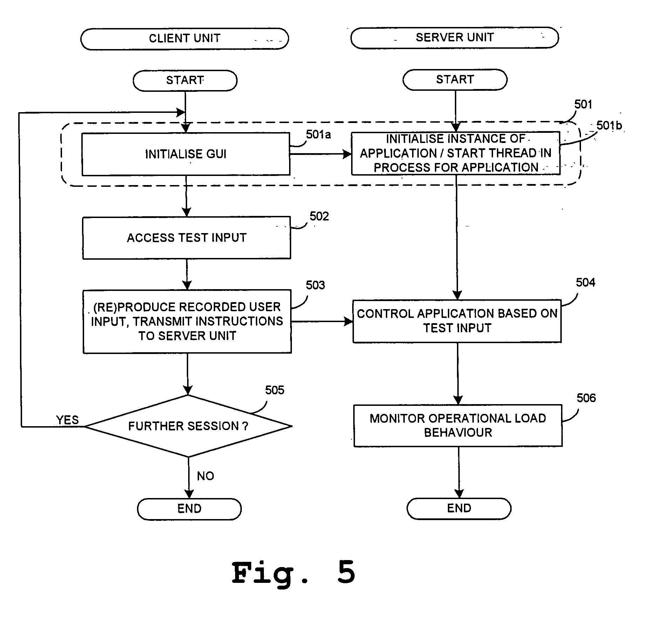

In the following a further embodiment of the invention will be described with regard to Fig. 5.

Fig. 5 shows operations of a method for generating an operational load according to another embodiment of the invention. The operations of Fig. 5 may be executed by the system of Fig. 1 or Fig. 3, however, Fig. 5 is not limited thereto. Fig. 5 particularly outlines operations in connection with reproducing test input operations in a plurality of communication sessions.

In a first operation 501 a first communication session is initialised between the client and the server.

This includes an operation 501a at the client to initialise a graphical user interface associated with the communication session and further includes an operation 501b to start at least one application at the server, which may involve initialising an instance of the application or allocating a thread in a process for the application associated with the communication session. The communication session will have a communication session ID, in order to distinguish this communication session from other communication sessions. The operations 501, 501a and 501b in association with establishing the communication session and starting the application program may be similar to the operations 401, 401a and 401b of Fig. 4.

Further to the operations of Fig. 4, establishing the communication sessions may involve initialising a modified user interface at the client, e.g. modified graphical user interface, adapted to receive user input operations not directly from a user, but from test input means, such as test input means 105 or 305 of Figs. 1 and 3, respectively, the test input means replaying the test input.

In an operation 502 test input is retrieved, e.g. by the test input means 105 or 305. The test input means may retrieve test input as, e.g., recorded with regard to Fig. 4. The user input operations may be retrieved from a locally stored test input file, or may be retrieved from a remote location, as outlined above.

In an operation 503 the test input means produces the test input as obtained in operation 502, and transmits corresponding instructions to the server. The producing may include a play-back operation of test input or any other operation to supply test input to the server.

The server, in operation 504, controls the at least one application based on the user input operations replayed at the client in association with the current communication session. The server may not even be "aware" that the current communication session is not a "real" communication session but a replayed communication session for stress testing purposes.

Controlling the application based on the user input operations at the server may involve any of the above outlined operations, e.g. modification, retrieval and storing operations of documents in connection with a text processing application.

Thereafter, in an operation 505 it is determined whether a further communication session between the client and the server should be established. Operation 505 may take place during the ongoing replay of test input, as specified by operation 503.

If in operation 505 the decision is "YES" i.e. if a further communication session should be established, the flow of operations returns to operation 501. Otherwise, the flow operation ends.

Accordingly, a plurality of communication sessions may be established between the client and the server, the execution times of the communication sessions overlapping one another.

In an operation 506, at the server, the operational load behaviour of the server may then be monitored, e.g. as known in the art.

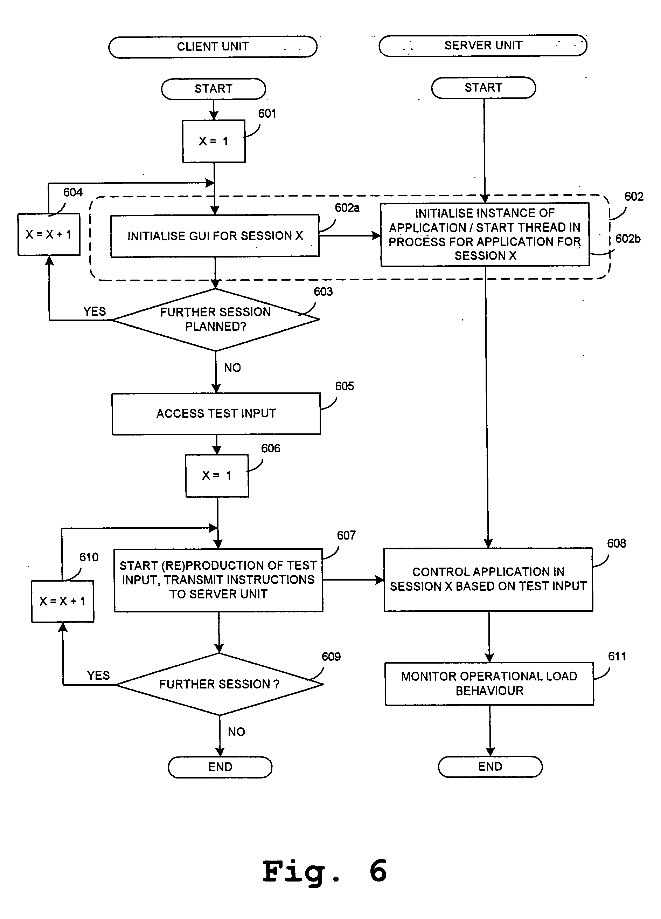

In the following a further embodiment of the invention would be outlined with regard to Fig. 6.

Fig. 6 shows operations of a method for generating an operational load at a server according to another embodiment of the invention, particularly showing operations for establishing and maintaining communication sessions for replaying test input. The operations of Fig. 6 may be executed by the system of Figs. 1 and 3, however, Fig. 6 is not limited thereto.

In a first operation 601, a communication session variable X is initialised to 1, indicating a first communication session.

Thereafter, in an operation 602 user interface for the communication session X = 1 is initialised, the graphical user interface being appropriately adapted to receive test input operations versus real user input commands. It is noted, that it is not necessary that the graphical user interface is actually displayed on a display at the client, it rather may be a process executed in the background.

In an operation 602b the at least one application is started at the server, e.g. including initialising and instance of the at least one application of the server or allocating a thread in a process for the at least one application at least for a communication session with a communication session parameter X = 1. The elements of operation 602 may be similar to the operation 401 of Fig. 4 and 501 of Fig. 5.

After establishing the communication session X = 1 in operation 602, it is determined in an operation 603, whether a further communication session is planned. If the decision in operation 603 is YES, in operation 604 the communication session parameter is incremented by 1, in order to identify a further communication session. The flow then returns to operation 602 and the next communication session X = X + 1 is established. By this proceeding a plurality of communication sessions between the client and the server can be established, in order to prepare a stress testing procedure.

If in operation 603 the decision is NO, i.e., if no further communication session is planned, in an operation 605 the test input is accessed, e.g. by the test input means 105 of Fig. 1 or 305 of Fig. 3. The accessing can include retrieving test input from any kind of test input source.

The test input may, e.g., be stored in a permanent of random access memory of the client, for facilitating a replay of pre-recorded input in each one of the communication sessions established in the operations 601-604.

Thereafter, in an operation 606 the communication session variable is again initialised to X = 1 and in an operation 607 the (re)production of the test input is started in the first communication session, including transmitting instructions to the server.

In an operation 608, at the server, the at least one application, in communication session 1 is controlled based on the received user input operations.

Thereafter, at the client, in an operation 609 it is determined whether a further communication session was established, and, if in operation 609 the decision is "YES", the communication session variable is incremented by 1 in operation 610 and the flow returns to operation 607, where the replay of test input in association with the next communication session is started. It is noted that the replay frequencies of the individual communication sessions preferably will overlap in time.

In an operation 611 the operation load behaviour may be monitored at the server.

The example of Fig. 6 shows a case, where a plurality of communication sessions between the client and the server is first established, and wherein then the test input is replayed to generate an operational load condition.

While it is possible that the same test input is replayed in each one of the communication sessions, it is also possible that different sets of test input operations are replayed in individual ones of the communication sessions, e.g., as recorded in association with the embodiment described with regard to Fig. 4.

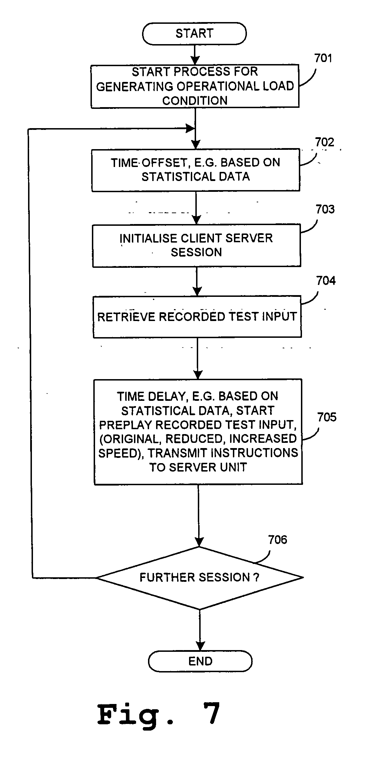

In the following a further embodiment of the invention will be described with regard to Fig. 7.

Fig. 7 shows operations for generating an operational load according to another embodiment of the invention, particularly outlining operations for simulating a realistic user behaviour in the process of generating an operational load condition. The operations of Fig. 7 may be carried out using the embodiments of Fig. 1 or 3, however, Fig. 7 is not limited thereto.

In the present case it is assumed that prior to generating operational load conditions in the present embodiment, information on user behaviour was obtained, i.e. as outlined with regard to Fig. 4. For example, it is assumed that times of operation, e.g. work or usage times of a plurality of individual users were obtained beforehand, e.g. by monitoring a plurality of "real" users accessing a server application.

In an operation 701 a process for generating an operational load condition at a server is started. In an example, the process involves, e.g., executing a program available at the client, the program including instructions to make the client to access test input for controlling at least one application and instructions to establish a plurality of communication sessions involving the at least one application and to produce the test input in association with each of the plurality of communication sessions.

Further, in an operation 702 a time delay for a current communication session is determined to avoid launching a plurality of communication sessions all at the same time. For example, the time delay may be determined randomly or may be determined on previously obtained user data. For example, statistical user behaviour data such as times of day of establishing a communication session may be used. For example individual times of start of a plurality of "simulated" communication sessions may approximate "real" times of start of a plurality of "real" communication sessions, as recorded beforehand.

In an operation 703 the current client server communication session is then established based on the time of day obtained in operation 701. Establishing the client communication session may be carried out as it was outlined with regard to previous embodiments.

In an operation 704 test input operations are retrieved e.g. as outlined with regard to previous embodiments.

Thereafter, in an operation 705 the replay of test input operations is started, advantageously with a timing or time delay modelling real user behaviour. This timing or time delay may also be determined randomly or based on actual user behaviour data.

The test input operations may then be replayed in the current communication session at their original speed of occurrence, at a reduced speed or at an increased speed. I.e., the time intervals between the individual user input operations of the recorded set of user input operations may be compressed or extended. The corresponding sequence of events or instructions is then transmitted, upon occurrence, to the server, to control at least one application at the server.

Thereafter, in an operation 706 it is determined whether a further "simulated" communication session is to be established, and, if the decision is "YES" the flow of operations returns to operation 702. If the decision in operation 706 is "NO", the flow ends. A desired number of communication sessions may be preset, e.g. 10, 100, 1000, etc.

While the operations of Fig. 7 are shown in a specific sequence, it is also possible that another sequence of operations is established for further embodiments. Further, at least some of the operations of Fig. 7 may be optional and omitted in alternative embodiments.

It is noted that the individual communication sessions will be established at least in a time overlapping manner, and the replay of the test input operations, either a single set of user input operations or a plurality of different sets of user input operations, will also overlap in time. Thus, a realistic user behaviour can be simulated, and the operational load conditions can be made more realistic.

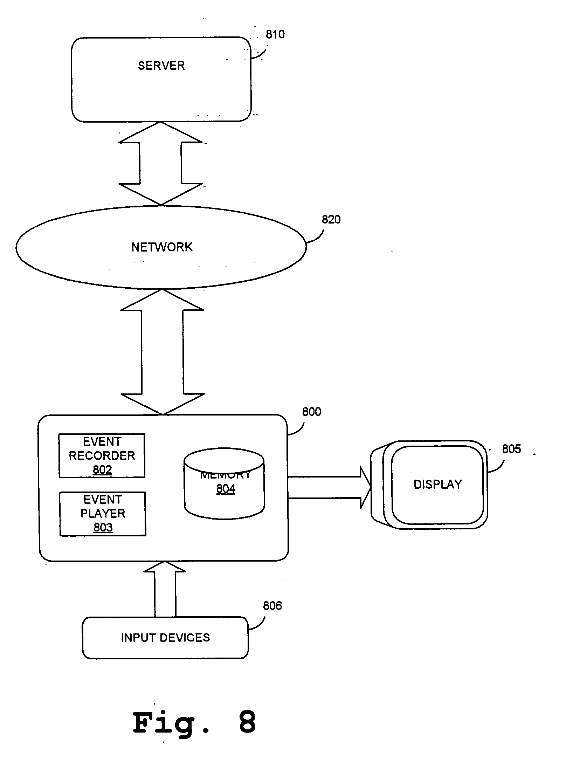

In the following a further embodiment of the invention will be described with regard to Fig. 8.

Fig. 8 shows elements of a system for generating an operational load according to another embodiment of the invention.

Fig. 8 illustrates a client 800 including an event recorder 802, an event player 803 and a memory 804. The client 800 may have a similar constitution as the client 100 described with regard to Fig. 1 and the client 300 described with regard to Fig. 3.

A event recorder 802 may be provided for recording user input operations in an exemplary communication session, for later replay in a stress testing process. The event recorder may be an integral part of the client 800, however, may also be arranged at an external location, e.g. remote from the client 800.

An event player 803 is provided for retrieving test input operations and replaying the test input operations within a plurality of communication sessions, as outlined before. The functionality of the event recorder and/or the event player may be realised by a central processing unit of the client unit 800 loading and executing an appropriate programming code.

The client 800 further includes a memory 804, e.g. for storing code instructions for realising the functionality of the client 800 and/or test input operations.

Further, Fig. 8 shows a display 805 associated with the client, e.g. for facilitating the control of operations of the client, including displaying a graphical user interface for recording user input operations and similar.

Further, Fig. 8 shows input devices 806, e.g. a keyboard and mouse device, as known in the art.

The client 800 is arranged to communicate with a server 810 through a network 820. The network 820 may be any kind of communication network, as known in the art, including a packet switch communication network such as the Internet or a local area network, a circuit switch communication network and similar. Further, the communication between the server and the client may be realised through dedicated communication links.

The server 810 is subject to a test under operational load conditions and may have elements and functionality as described with regard to the previous embodiments.

During operation of the system shown in Fig. 8, the client 800 will be used to establish a plurality of communication sessions between the client and the server. Each communication session preferably has a communication session ID and is executed independent from other communication sessions.

Further, the client 800, more precisely the event player 803, may be used to replay test input operations within each of the established communication sessions, in order to generate an operational load condition at the server. The operational load behaviour at the server 810 may then be monitored, e.g. regarding stability, latency, available resources, etc., in order to determine a quality of service.

The embodiment of Fig. 8 shows a single server 810, however, in an alternative embodiment, a plurality of servers may be provided for the test under operational load conditions.

In this case the communication session may be established between the client and the plurality of servers substantially as outlined above. The communication sessions may be allocated to individual ones of the plurality of servers using a load balancing mechanism, e.g. taking into account a processing load of individual ones of the plurality of servers, and similar.

In a further alternative a plurality of servers and/or a plurality of clients may be provided in order to establish a larger number of communication sessions, for further tests under operational load conditions. In this case it can be assured that the capabilities of the plurality of clients suffices to establish and maintain the plurality of communication sessions including replaying test input operations, without reaching client resource limitations.

It is noted that a program or programs may be provided having instructions adapted to cause a data processing device or a network of data processing devices to realize elements of the above embodiments and to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples.

A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment of the invention, a client for generating an operational processing load at a server may have the following elements.
1) Client for generating an operational processing load at a server, including
   a code section having instructions adapted to access test input for controlling at least one application; and
   a code section having instructions adapted to establish a plurality of communication sessions involving the at least one application and to produce the test input in association with each of the plurality of communication sessions.
2) Client of 1), including a code section having instructions of a graphical user interface and including a code section having instructions adapted to record user input operations of the graphical user interface, the user input operations constituting test input for controlling the at least one application at a server.
3) Client of 1), including a code section having instructions adapted to record time intervals between the individual user input operations.
4) Client of 1), including a code section having instructions adapted to store the test input as test input data and a code section having instructions adapted to access the test input data within each of the plurality of communication sessions for replaying the test input data in each of the communication sessions to simulate user input.
5) Client of 1), including an instance of the graphical user interface for each of the plurality of communication sessions.
6) Client of 1), wherein each of the plurality of communication sessions includes a thread in a process at the server involving the at least one application.
7) Client of 1), wherein each of the plurality of communication sessions involves an instance of the at least one application at the server.
8) Client of 1), including a code section having instructions adapted to transmit the test input in each communication session to the server.
9) Client of 1), including a code section having instructions adapted to start the production of the test input in at least two communication sessions with a time offset.
10) Client of 1), including a code section having instructions adapted to establish each of the plurality of communication sessions based on statistical user behaviour data.
11) Client of 1), including a code section having instructions adapted to start the production of the test input in a communication session based on statistical user behaviour data.
12) Client of 11), including a code section having instructions adapted to produce the test input with modified time intervals between the individual operations of the test input.
13) Client of 12), wherein the modification includes compressing or expanding the time intervals between the individual operations of the test input.

## Claims

1. Method for generating an operational processing load, including:
accessing test input for controlling at least one application;
establishing a plurarity of communication sessions involving the at least one application; and
producing the test input in association with each of the plurality of communication sessions.

2. Method of claim 1, including recording user input operations in a graphical user interface at the client, wherein the user input operations constitute the test input for controlling the at least one application at a server.

3. Method of at least one of claims 1 and 2, including recording time intervals between the individual user input operations.

4. Method of at least one of claims 1 to 3, including storing the test input as test input data at the client and accessing the test input data within each of the plurality of communication sessions for replaying the test input data in each of the communication sessions to simulate user input.

5. Method of at least one of claims 1 to 4, wherein each of the plurality of communication sessions involves an instance of the graphical user interface at the client.

6. Method of at least one of claims 1 to 5, wherein each of the plurality of communication sessions includes a thread in a process involving the at least one application.

7. Method of at least one of claims 1 to 5, wherein each of the plurality of communication sessions involves an instance of the at least one application at the server.

8. Method of at least one of claims 1 to 7, including transmitting the test input in each communication session to the server.

9. Method of at least one of claims 1 to 8, wherein the production of the test input is started in-at least two communication sessions with a time offset.

10. Method of at least one of claims 1 to 9, wherein each of the plurality of communication sessions is established based on statistical user behaviour data.

11. Method of at least one of claims 1 to 10, wherein the production of the test input in the communication session is started based on statistical user behaviour data.

12. Method of claim 3, wherein for producing the test input the time intervals between the individual operations of the test input is modified.

13. Method of claim 12, wherein the modification includes compressing or expanding the time intervals between the individual operations of the test input.

14. A program having instructions adapted to cause data processing means to carry out the method of at least one of the claims 1 - 13.

15. A computer readable medium, in which a program is embodied, where the program is to make a computer execute the method of at least one of the claims 1 - 13.

16. A computers program product comprising the computer readable medium according to claim 14.

17. Client for generating an operational processing load at a server, including
test input means for accessing test input for controlling at least one application; and
processing means adapted to establish a plurality of communication sessions involving the at least one application and to produce the test input in association with each of the plurality of communication sessions.

18. Client of claim 17, including a graphical user interface and wherein the test input means is adapted to record user input operations of the graphical user interface and the user input operations constitute the test input for controlling the at least one application at a server.

19. Client of at least one of claims 17 and 18, wherein the test input means is adapted to record time intervals between the individual user input operations.

20. Client of at least one of claims 17 to 19, wherein the test input means is adapted to store the test input as test input data and to access the test input data within each of the plurality of communication sessions for replaying the test input data in each of the communication sessions to simulate user input.

21. Client of at least one of claims 17 to 20, including an instance of the graphical user interface for each of the plurality of communication sessions.

22. Client of at least one of claims 1-7 to 21, wherein each of the plurality of communication sessions includes a thread in a process at the server involving the at least one application.

23. Client of at least one of claims 17 to 21, wherein each of the plurality of communication sessions involves an instance of the at least one application at the server.

24. Client of at least one of claims 17 to 23, including means for transmitting the test input in each communication session to the server.

25. Client of at least one of claims 17 to 24, wherein the processing means is adapted to start the production of the test input in at least two communication sessions with a time offset.

26. Client of at least one of claims 17 to 25, wherein the processing means is adapted to establish each of the plurality of communication sessions based on statistical user behaviour data.

27. Client of at least one of claims 17 to 26, wherein the processing means is adapted to start the production of the test input in a communication session based on statistical user behaviour data.

28. Client of claim 19, wherein the test input means is adapted to produce the test input with modified time intervals between the individual operations of the test input.

29. Client of claim 28, wherein the modification includes compressing or expanding the time intervals between the individual operations of the test input.
